# EUROPEAN PATENT SPECIFICATION

(11) **EP 3 465 856 B1**
(45) Date of publication and mention of the grant of the patent: **22.12.2021**
(21) Application number: 17727308.3
(22) Date of filing: 24.05.2017
(51) Int. Cl.: H02G 3/38, F24D 3/14

(54) **A CABLE AND BUILDING SERVICES MANAGEMENT SYSTEM**
SYSTEM ZUR VERWALTUNG VON KABELN UND GEBÄUDESERVICELEITUNGEN
SYSTÈME DE GESTION DE CÂBLES ET D'ÉQUIPEMENTS MÉCANIQUES

(30) Priority: 26.05.2016 GB 201609336
(43) Date of publication of application: 10.04.2019
(73) Proprietor: O'Donnell, Mark, Renfrew PA4 0AF (GB); Boyle, Craig, Robroyston, Glasgow G33 1BN (GB)
(72) Inventor: O'Donnell, Mark, Renfrew PA4 0AF (GB); Boyle, Craig, Robroyston, Glasgow G33 1BN (GB)
(74) Representative: Murgitroyd & Company
(86) International application number: PCT/GB2017/051445
(87) International publication number: WO 2017/203238

(56) References cited:
- EP-A1- 0 381 571
- WO-A1-2013/117824
- DE-A1- 4 201 553
- DE-C1- 19 912 922
- GB-A- 2 214 076
- US-A- 5 082 712
- US-A1- 2008 017 725

## Description

### Field of Invention

This invention relates to cable and building services management systems, primarily for managing cables and building service lines in buildings.

### Background of Invention

Cables and other building service lines such as air conditioning pipes and fluid conduits need to be run through buildings in an organised manner. Cable and building services management systems for this purpose come in a variety of different forms. Some cable and building services management systems comprise a plurality of tray-like sections. Each section includes a plurality of apertures for receiving fasteners. The fastener is threaded through the aperture and around one or more cables to secure them. Examples of existing solutions can be found in documents DE4201553A1, WO2013/117824A1, GB2214076A, DE19912922C1, US2008/017725A1, US5082712A and EP0381571 A.

These systems require couplers to join sections together, brackets to support sections vertically or horizontally, and bespoke sections to negotiate corner points. Such couplers, brackets and bespoke sections add cost and increase the installation time of the cable and building services management systems.

It is the object of the present invention to obviate or mitigate at least one disadvantage with prior cable and building services management systems.

### Summary of Invention

According to a first aspect of the present invention, there is provided a cable and building services management system, comprising:
at least one support sheet including a plurality of surface fixing apertures for fixing the sheet to a surface, and a plurality of protrusions on an upper surface of the sheet, wherein each protrusion has at least one securing aperture for securing one or more cables to the sheet; and
a plurality of fasteners, wherein each fastener is adapted to engage with a securing aperture so as to secure one or more cables and/or building service lines to the sheet by threading the fastener through the securing aperture and around the cable;
wherein the support sheet is formed from a metal or alloy of a thickness in the range of 0.5mm to 5mm suitable for the sheet to be dispensed from a roll;
wherein the protrusions are formed in such a way that a corresponding plurality of depressions are formed on a lower surface of the sheet; and
wherein the protrusions and depressions are equidistantly spaced about the at least one support sheet, such that the depressions of a first sheet can receive the protrusions of a second sheet when the first sheet is placed upon the second sheet.

Each protrusion may have a pair of securing apertures.

One group of the protrusions may be each provided with a sheet attachment aperture for attaching a pair of the support sheets to one another.

The sheet attachment apertures may be provided in every second protrusion in the longitudinal and/or lateral directions.

The system may comprise a plurality of adjacent support sheets and wherein each adjacent pair of sheets is arranged so as to at least partially overlap one another, with the depressions of one sheet receiving the protrusions in the other sheet.

Each pair of adjacent sheets may be arranged parallel or perpendicular to one another.

The metal or alloy may be steel.

According to a second aspect of the present invention, there is provided a method of managing one or more cables and/or building service lines, the method comprising the steps of:
providing a cable and building services management system according to the first aspect of the invention;
fixing the at least one support sheet to a surface using surface fixings which extend through the surface fixing apertures; and
securing the or each cable and/or building service line to at least one of the plurality of the protrusions by engaging a fastener with a securing aperture of the at least one of the plurality of protrusions.

### Brief Description of the Drawings

Preferred embodiments of the present invention will now be described, by way of example only, with reference to the accompanying drawings, in which:
Fig. 1 shows a plan view of a support sheet of a cable and building services management system;
Fig. 2 shows a side view of a portion of the cable and building services management system shown in Fig. 1;
Fig. 3 shows a cable and building services management system comprising a plurality of support sheets;
Fig. 4 shows a perspective view of the support sheet of Fig. 1; and
Fig. 5 shows the cable and building services management system of Fig.1 securing a cable to a surface.

### Detailed Description of the Drawings

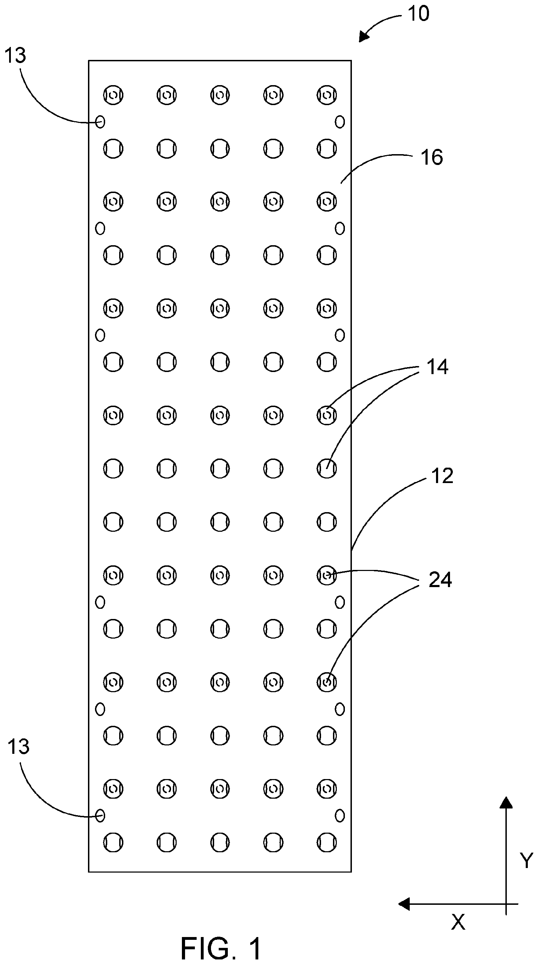

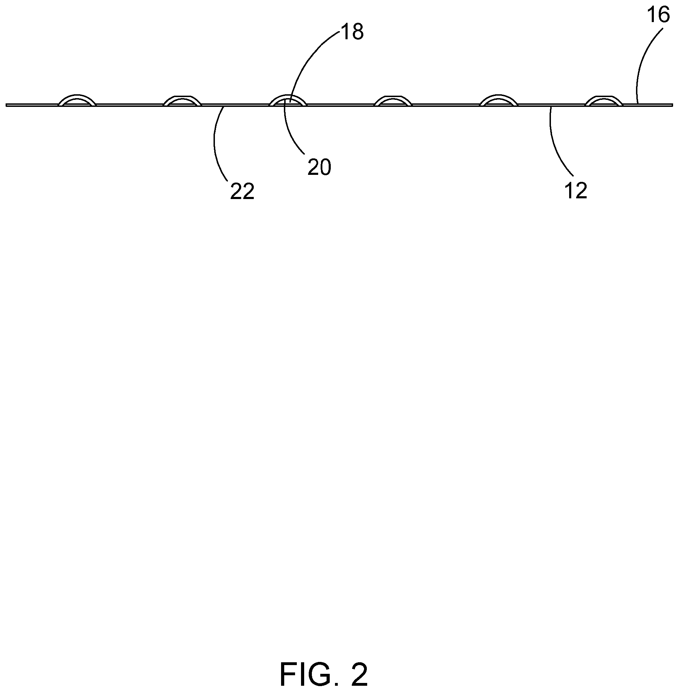

With reference to Figs. 1 and 2, there is shown a cable and building services management system 10 for managing cables and other building service lines such as air conditioning pipes and fluid conduits. In this preferred embodiment the cable and building services management system 10 will be described with reference to managing cables. The cable and building services management system 10 comprises at least one support sheet 12 that includes a plurality of surface fixing apertures 13, which in the depicted example are spaced along the longitudinal edges of the sheet 12. The surface fixing apertures 13 are adapted to receive surface fixings (not shown) which in use secure the support sheet 12 to a surface.

The support sheet 12 also includes a plurality of protrusions 14 located on an upper surface 16 of the sheet. The protrusions 14 extend upwards away from the upper surface 16 of the sheet, and each protrusion 14 includes a securing aperture 18. In the depicted example the protrusions 14 are domed or hemispherical but it should be understood that the invention is not limited to this specific shape of protrusion.

The securing aperture 18 is adapted to receive a fastener (not shown) which in use secures a cable to the support sheet 12.

The protrusion may be formed by pressing a lower surface 22 of the support sheet 12. In the depicted example, each protrusion 14 comprises a pair of securing apertures 18, and has a corresponding depression 20 located on the lower surface of the sheet 22.

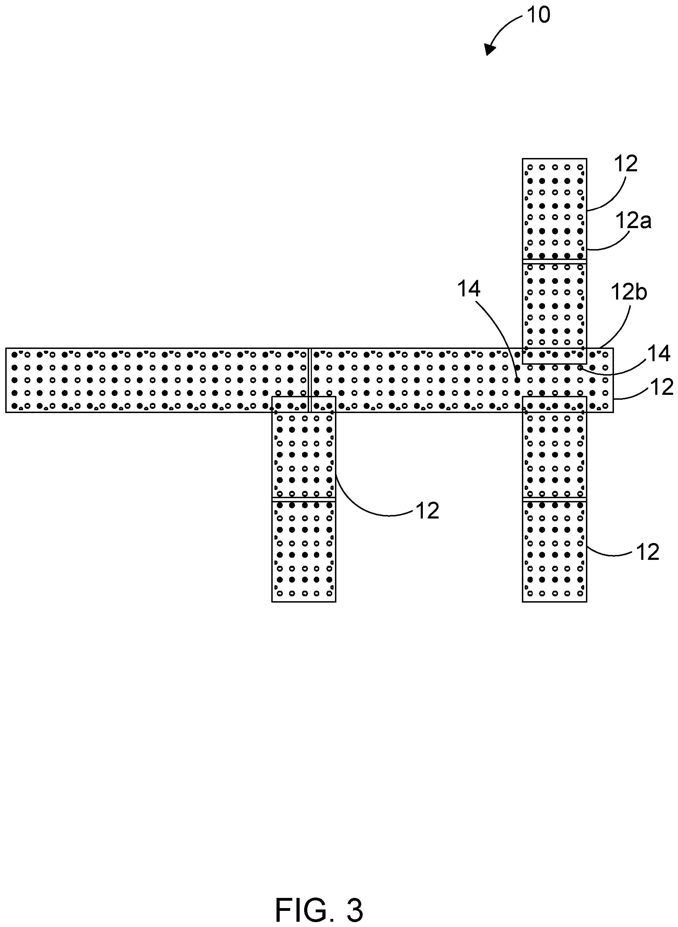

With reference to Figs. 2 and 3, the protrusions 14 and depressions 20 are consistently spaced about the support sheet 12 such that depressions 20 of a first sheet 12a can receive protrusions 14 of a second sheet 12b when the first sheet is placed upon the second sheet. The protrusions 14 and depressions 20 are preferably equidistantly spaced about the support sheet 12.

In the depicted example, one group of the protrusions 14 are each provided with a sheet attachment aperture 24 for attaching a pair of the support sheets 12 to one another. The sheet attachment aperture 24 is adapted to receive a sheet attachment fixture (not shown) which in use extends through the attachment aperture of a first support sheet and through a corresponding sheet attachment aperture of a second support sheet.

The sheet attachment apertures 24 may be provided in every second protrusion 14 in the longitudinal direction Y and/or lateral direction X. In the depicted example, the sheet attachment apertures 24 are provided in every second protrusion 14 in the longitudinal direction Y.

With reference to Fig. 3, there is shown a plurality of support sheets 12 making up the cable and building services management system 10 for managing a system of cables. In the depicted example, the cable and building services management system 10 comprises a pair of adjacent support sheets 12a, 12b. A first sheet 12a is arranged to at least partially overlap a second sheet 12b, and the depressions of the first sheet 12a (not shown) receive the protrusions 14 of the second sheet 12b. In the depicted example the first sheet 12a is arranged such it is perpendicular to the second sheet 12b. However, for the avoidance of any doubt, it should be understood that the first and second sheets 12a, 12b may be arranged such that they are parallel to each other. In the depicted example, the cable and building services management system 10 has four support sheets 12. However, the cable and building services management system 10 may have a different configuration with a different number of sheets 12 depending on the system of cables being managed.

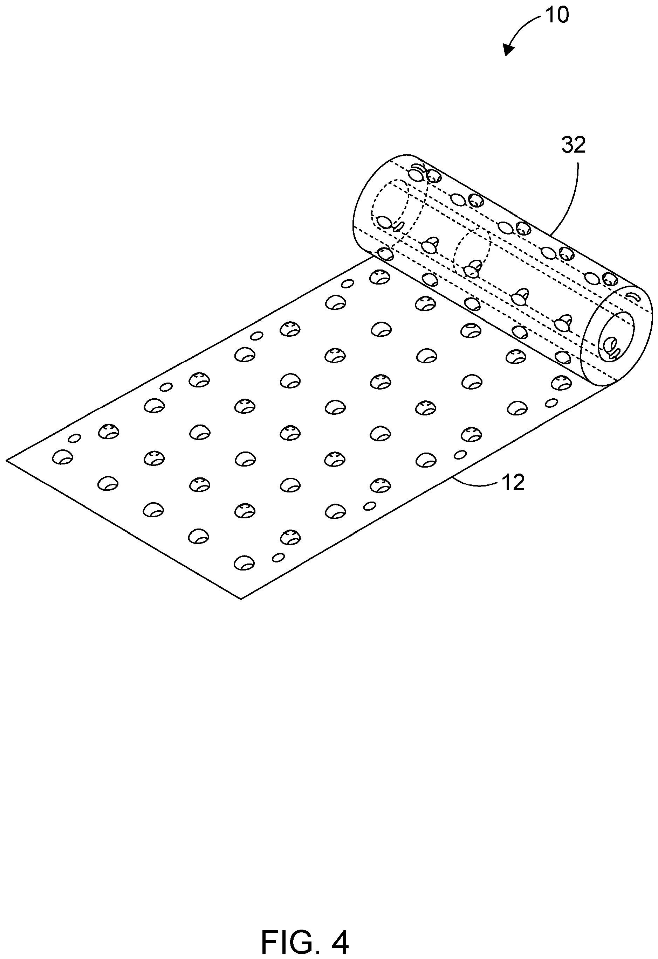

With reference to Fig. 4, the support sheet 12 may be formed such that it is of a thickness suitable for the support sheet to be dispensed from a roll 32. The cable and building services management system 10 may be stored as a roll 32 when it is transported prior to installation. In a preferred embodiment, the support sheet 12 is formed from a metal or an alloy with a thickness in the range of 0.5mm to 5mm. Most preferably, the support sheet 12 is formed from steel with a thickness of 1mm.

### Industrial Applicability

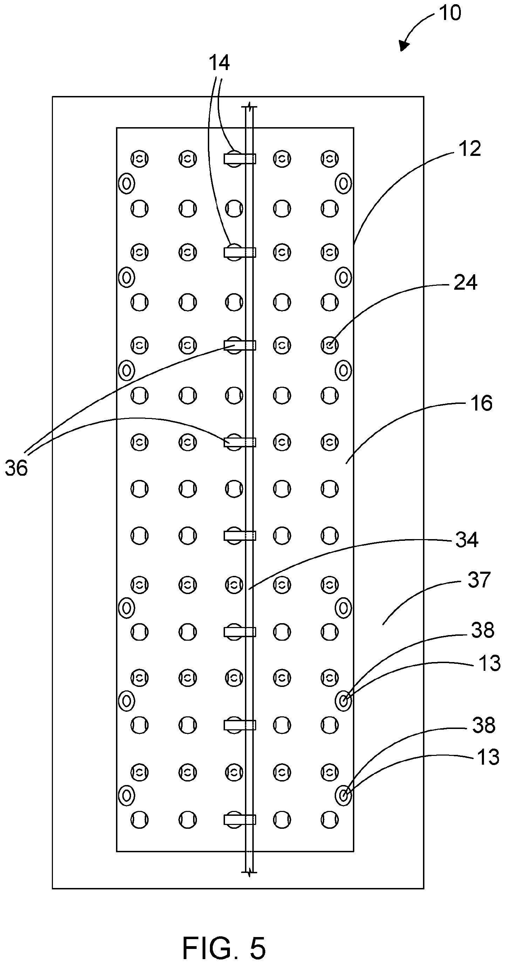

With reference to Fig. 5, how the cable and building services management system 10 of Fig. 1 may be used to manage a cable 34 will now be described. Firstly, if the sheet 12 is provided in a roll, an installer unrolls and cuts a suitable length of the support sheet 12 from the roll after transportation. The installer then secures a first support sheet 12 to a surface 37 with surface fixings 38 which extend through the surface fixing apertures 13. The installer then arranges the cable 34 on the upper surface 16 of the sheet 12, and secures the cable 34 to at least one of the plurality of protrusions 14 using a fastener 36 by threading the fastener through the securing aperture (not shown) and around the cable 34. The installer may secure further cables and/or building service lines to the support sheet as required using additional protrusions on the support sheet.

The installer may also secure further cables and/or building service lines to the cable and building services management system 10 by attaching a second support sheet (not shown). To do this, the user places the second support sheet on top of the first support sheet 12 such that the protrusions 14 of the first sheet are received inside corresponding depressions (not shown) of the second sheet.

To further secure the first 12 and second sheets together, the user may align the sheet attachment apertures 24 of the first sheet 12 with the sheet attachment apertures of the second sheet (not shown) when placing the first sheet upon the second sheet. The user then secures the sheets together with sheet attachment fixings (not shown) which each extend through the attachment apertures of the first sheet and the attachment apertures of the second sheet. The user may arrange the second sheet to be perpendicular to the first sheet, for example if the cables/services need to be run around a corner. Alternatively or in addition, further support sheets may be laid parallel to the first sheet 12, or else end on end in a longitudinal direction.

The cable and building services management system requires less components than prior cable and building services management systems, saving money and man hours during installation. The cable and building services management system may also be more easily stored and transported because a plurality of support sheets may be stacked on top of each other or provided in rolls.

Because the protrusions and depressions may be equidistantly spaced about the at least one support sheet, such that the depressions of a first sheet can receive the protrusions of a second sheet when the first sheet is placed upon the second sheet, the first and second sheets may be attached to each other with no additional brackets.

Because a pair of the support sheets may be arranged to be perpendicular to each other, the cable and building services management system may easily secure the cables at corner points. Furthermore, no brackets or bespoke components (e.g. unique corner pieces) are required for the cable and building services management system.

Because the support sheet may be formed of a thickness which allows the sheet to be dispensed from a roll, the cable and building services management system requires less storage spaced prior to being assembled.

Modifications and improvements may be incorporated without departing from the scope of the invention, which is defined by the appended claims.

The sheet may be formed of plastic or rubber.

The surface fixings may be any suitable fixings such as bolts, screws or nails.

The fastener may be any suitable fastener such as a length of chord or string.

The sheet attachment fixing may be any suitable fixing such as a bolt or split pin.

Instead of sheet attachment fixings an adhesive may be used to bond a first support sheet to the second support sheet so that the first and second sheets are attached. The shape of the protrusions may be pyramidal, conical or any other suitable shape.

Each protrusion may be provided with just a single securing aperture.

The cable and building services management system may not be dispensed from and stored as a roll. The cable and building services management system may, for example, be stored as a plurality of stacked support sheets. The thickness of the support sheet may be thicker than a suitable thickness for the support sheet to be dispensed from a roll.

Preferably every second protrusion is provided with a sheet attachment aperture. However, alternatively, each protrusion may be provided with a sheet attachment aperture.

## Claims

1. A cable and building services management system, comprising:
at least one support sheet (12) including a plurality of surface fixing apertures (13) for fixing the sheet to a surface, and a plurality of protrusions (14) on an upper surface (16) of the sheet, wherein each protrusion has at least one securing aperture (18) for securing one or more cables and/or building service lines to the sheet; and
a plurality of fasteners (36), wherein each fastener is adapted to engage with a securing aperture (18) so as to secure one or more cables and/or building service lines to the sheet by threading the fastener through the securing aperture and around the cable;
wherein the support sheet (12) is formed from a metal or alloy of a thickness in the range of 0.5mm to 5mm suitable for the sheet to be dispensed from a roll (32);
wherein the protrusions (14) are formed in such a way that a corresponding plurality of depressions (20) are formed on a lower surface (22) of the sheet (12); and
wherein the protrusions (14) and depressions (20) are equidistantly spaced about the at least one support sheet (12), such that the depressions of a first sheet (12a) can receive the protrusions of a second sheet (12b) when the first sheet is placed upon the second sheet.

2. The system of claim 1 wherein each protrusion (14) has a pair of securing apertures (18).

3. The system of either preceding claim, wherein one group of the protrusions (14) are each provided with a sheet attachment aperture (24) for attaching a pair of the support sheets (12) to one another.

4. The system of claim 3, wherein the sheet attachment apertures (24) are provided in every second protrusion (14) in the longitudinal and/or lateral directions (Y,X).

5. The system of any preceding claim, comprising a plurality of support sheets (12a,12b) and wherein each adjacent pair of sheets is arranged so as to at least partially overlap one another, with the depressions (20) of one sheet receiving the protrusions (14) in the other sheet.

6. The system of claim 5, wherein each pair of adjacent sheets (12a,12b) are arranged parallel or perpendicular to one another.

7. The system of any preceding claim, wherein the metal or alloy is steel.

8. A method of managing one or more cables and/or building service lines, the method comprising the steps of:
providing a cable and building services management system according to any preceding claim;
fixing the at least one support sheet (12) to a surface using surface fixings which extend through the surface fixing apertures (13); and
securing the or each cable and/or building service line to at least one of the plurality of the protrusions (14) by engaging a fastener (36) with a securing aperture (18) of the at least one of the plurality of protrusions.

## Patentansprüche

1. Ein Kabel- und Gebäudetechnikverwaltungssystem, beinhaltend:
mindestens eine Tragplatte (12), die eine Vielzahl von Oberflächenfixierungsöffnungen (13) zum Fixieren der Platte an einer Oberfläche und eine Vielzahl von Vorsprüngen (14) auf einer oberen Oberfläche (16) der Platte umfasst, wobei jeder Vorsprung mindestens eine Sicherungsöffnung (18) zum Sichern eines oder mehrerer Kabel und/oder einer oder mehrerer Gebäudetechnikleitungen an der Platte aufweist; und
eine Vielzahl von Befestigungsmitteln (36), wobei jedes Befestigungsmittel angepasst ist, um in eine Sicherungsöffnung (18) einzugreifen, um ein(e) oder mehrere Kabel und/oder Gebäudetechnikleitungen durch das Fädeln des Befestigungsmittels durch die Sicherungsöffnung und um das Kabel herum an der Platte zu sichern;
wobei die Tragplatte (12) aus einem Metall oder einer Legierung mit einer Dicke in dem Bereich von 0,5 mm bis 5 mm, geeignet für die Ausgabe der Platte von einer Rolle (32), gebildet ist;
wobei die Vorsprünge (14) derart gebildet sind, dass eine entsprechende Vielzahl von Vertiefungen (20) auf einer unteren Oberfläche (22) der Platte (12) gebildet sind; und
wobei die Vorsprünge (14) und die Vertiefungen (20) mit gleichmäßigem Abstand über die mindestens eine Tragplatte (12) angeordnet sind, sodass die Vertiefungen einer ersten Platte (12a) die Vorsprünge einer zweiten Platte (12b) aufnehmen können, wenn die erste Platte auf der zweiten Platte platziert wird.

2. System gemäß Anspruch 1, wobei jeder Vorsprung (14) ein Paar Sicherungsöffnungen (18) aufweist.

3. System gemäß einem der vorhergehenden Ansprüche, wobei jeder einer Gruppe der Vorsprünge (14) mit einer Plattenanbringungsöffnung (24) zum Aneinander-Anbringen eines Paares der Tragplatten (12) versehen ist.

4. System gemäß Anspruch 3, wobei die Plattenanbringungsöffnungen (24) in jedem zweiten Vorsprung (14) in der Längs- und/oder Seitenrichtung (Y, X) bereitgestellt sind.

5. System gemäß einem der vorhergehenden Ansprüche, beinhaltend eine Vielzahl von Tragplatten (12a, 12b) und wobei jedes benachbarte Paar Platten so angeordnet ist, dass sie einander mindestens teilweise überlappen, wobei die Vertiefungen (20) der einen Platte die Vorsprünge (14) in der anderen Platte aufnehmen.

6. System gemäß Anspruch 5, wobei jedes Paar benachbarter Platten (12a, 12b) parallel oder senkrecht zueinander angeordnet ist.

7. System gemäß einem der vorhergehenden Ansprüche, wobei das Metall oder die Legierung Stahl ist.

8. Ein Verfahren zum Verwalten eines oder mehrere Kabel und/oder einer oder mehrerer Gebäudetechnikleitungen, wobei das Verfahren die folgenden Schritte beinhaltet:
Bereitstellen eines Kabel- und Gebäudetechnikverwaltungssystems gemäß einem der vorhergehenden Ansprüche;
Fixieren der mindestens einen Tragplatte (12) an einer Oberfläche unter Verwendung von Oberflächenfixierungen, die sich durch die Oberflächenfixierungsöffnungen (13) erstrecken; und
Sichern des oder jedes Kabels und/oder der oder jeder Gebäudetechnikleitung an mindestens einem der Vielzahl von Vorsprüngen (14) durch das In-Eingriff-Bringen eines Befestigungsmittels (36) mit einer Sicherungsöffnung (18) des mindestens einen der Vielzahl von Vorsprüngen.

## Revendications

1. Un système de gestion de câbles et d'installations de bâtiment, comprenant :
au moins une feuille de support (12) incluant une pluralité d'ouvertures (13) de fixation pour surface pour fixer la feuille à une surface, et une pluralité de saillies (14) sur une surface supérieure (16) de la feuille, chaque saillie ayant au moins une ouverture d'assujettissement (18) pour assujettir un(e) ou plusieurs câbles et/ou conduites d'installations de bâtiment à la feuille ; et
une pluralité d'organes d'assemblage (36), où chaque organe d'assemblage est conçu pour se mettre en prise avec une ouverture d'assujettissement (18) de sorte à assujettir un(e) ou plusieurs câbles et/ou conduites d'installations de bâtiment à la feuille par enfilage de l'organe d'assemblage à travers l'ouverture d'assujettissement et autour du câble ;
où la feuille de support (12) est formée à partir d'un métal ou d'un alliage d'une épaisseur comprise dans l'intervalle de 0,5 mm à 5 mm adapté pour que la feuille soit distribuée à partir d'un rouleau (32) ;
où les saillies (14) sont formées de telle manière qu'une pluralité correspondante de creux (20) sont formés sur une surface inférieure (22) de la feuille (12) ; et
où les saillies (14) et les creux (20) sont espacés de façon équidistante autour de l'au moins une feuille de support (12), de telle sorte que les creux d'une première feuille (12a) peuvent recevoir les saillies d'une deuxième feuille (12b) lorsque la première feuille est placée sur la deuxième feuille.

2. Le système de la revendication 1 où chaque saillie (14) a une paire d'ouvertures d'assujettissement (18).

3. Le système de l'une ou l'autre revendication précédente, où un groupe des saillies (14) sont chacune munie d'une ouverture d'attache de feuille (24) pour attacher une paire des feuilles de support (12) l'une à l'autre.

4. Le système de la revendication 3, où les ouvertures d'attache de feuille (24) sont fournies dans une saillie sur deux (14) dans les directions longitudinale et/ou latérale (Y, X).

5. Le système de n'importe quelle revendication précédente, comprenant une pluralité de feuilles de support (12a, 12b) et où chaque paire adjacente de feuilles est agencée de sorte qu'elles se chevauchent au moins partiellement l'une l'autre, les creux (20) d'une feuille recevant les saillies (14) de l'autre feuille.

6. Le système de la revendication 5, où chaque paire de feuilles adjacentes (12a, 12b) sont agencées parallèlement ou perpendiculairement l'une à l'autre.

7. Le système de n'importe quelle revendication précédente, où le métal ou l'alliage est de l'acier.

8. Un procédé de gestion d'un(e) ou de plusieurs câbles et/ou conduites d'installations de bâtiment, le procédé comprenant les étapes :
de fourniture d'un système de gestion de câbles et d'installations de bâtiment selon n'importe quelle revendication précédente ;
de fixation de l'au moins une feuille de support (12) à une surface à l'aide de fixations pour surface qui s'étendent à travers les ouvertures (13) de fixation pour surface ; et
d'assujettissement du/de la ou de chaque câble et/ou conduite d'installations de bâtiment à au moins une saillie de la pluralité de saillies (14) par mise en prise d'un organe d'assemblage (36) avec une ouverture d'assujettissement (18) de l'au moins une saillie de la pluralité de saillies.
